# EUROPÄISCHE PATENTSCHRIFT

(11) **EP 2 153 956 B1**
(45) Veröffentlichungstag und Bekanntmachung des Hinweises auf die Patenterteilung: **10.11.2010**
(21) Anmeldenummer: 09009184.4
(22) Anmeldetag: 14.07.2009
(51) Int. Cl.: B27N 3/00, C08J 5/04

(54) **Verbundwerkstoff**
Compound material
Matière active composite

(30) Priorität: 07.08.2008 DE 102008036880
(43) Veröffentlichungstag der Anmeldung: 17.02.2010
(73) Patentinhaber: Inoutic / Deceuninck GmbH, 94327 Bogen (DE)
(72) Erfinder: Schuhbauer, Gerhard, 94327 Bogen (DE)
(74) Vertreter: advotec.

(56) Entgegenhaltungen:
- EP-A- 1 815 956
- WO-A-2007/050324
- DE-A1- 2 245 871

## Beschreibung

Die vorliegende Erfindung betrifft einen Naturfaser-Kunststoff-Verbundwerkstoff (WPC), nämlich einen Naturfaser-PVC-Verbundwerkstoff.

Aus dem Stand der Technik ist es bekannt, thermoplastische Materialien, wie beispielsweise Polyvinylchlorid, bei der Herstellung von beispielsweise Fenstern zu verwenden. Ebenfalls ist es aus dem Stand der Technik bekannt, die genannten Materialien mit Holzelementen zu kombinieren.

Bekannt ist auch, Polyvinylchlorid mit Holzfasern zu kombinieren, um extrudierte Materialien herzustellen (z. B. EP 1 815 956 A1). Derartige Materialien sind erfolgreich in Form eines Strukturelements verwendet worden, das ein direkter Ersatz für Holz ist. Holz-PVC-Verbundstoffe sind bei vielen Fenster- und Türanwendungen einsetzbar.

DE 2245871 beschreibt einen Strang, der beispielsweise als Fußbodenleiste ausgebildet sein kann, welcher aus einem Verbundwerkstoff aus Hart-PVC und Holz besteht. Dieser Strang kann mit einer Ummantelung aus Weich-PVC versehen sein.

DD 204062 A1 beschreibt eine Trägerschicht aus zerkleinertem Thermoplastabfall, welcher PVC enthalten kann, und Holzspänen.

Ein Nachteil der aus dem Stand der Technik bekannten Holz-Kunststoff-Verbundwerkstoffe und der daraus gefertigten Gegenstände besteht darin, dass diese relativ brüchig und spröde sind. Ferner zeigen Gegenstände, welche aus den bereits bekannten Holz-PVC-Verbundswerkstoffen hergestellt sind, im Laufe der Zeit Rissbildungen, welche beispielsweise durch ein Aufsaugen von Wasser durch die Holzanteile im Verbundwerkstoff hervorgerufen werden. Ferner weisen die genannten Gegenstände aus dem Stand der Technik oft so genannte Glanzstellen auf, welche beim Herstellungsprozess entstehen.

Der vorliegenden Erfindung liegt die Aufgabe zugrunde, einen Verbundwerkstoff zur Verfügung zu stellen, welcher die Nachteile des Standes der Technik überwindet.

Diese Aufgabe wird gelöst durch einen Verbundwerkstoff, mit den Merkmalen des Anspruchs 1.

Der Erfinder hat herausgefunden, dass der erfindungsgemäße Verbundwerkstoff und insbesondere die daraus hergestellten Gegenstände extrem bruchfest sind (siehe folgende Versuchsbeispiele). Zudem weisen der erfindungsgemäße Werkstoff und die daraus hergestellten Gegenstände den enormen Vorteil auf, dass kaum Rissbildungen bei Einwirkung von Wasser zu beobachten sind. Es wurde beobachtet, dass der erfindungsgemäße Verbundwerkstoff wesentlich weniger Wasser aufnimmt, als die Verbundwerkstoffe aus dem Stand der Technik, was einer Rissbildung stark entgegenwirkt. Ein weiterer enormer Vorteil besteht darin, dass beim Spritzgießen von Gegenständen, welche aus dem erfindungsgemäßen Verbundwerkstoff hergestellt sind, nur noch ca. ein Drittel der Energie nötig ist, welche beim Spritzgießen herkömmlicher Holz-Hart-PVC-Verbundwerkstoffe aufgebracht werden muss. Ferner kann die Werkzeugtemperatur beim Spritzgießen um ca. 50 % reduziert werden, was mit einer hohen Energieeinsparung verbunden ist (siehe Versuchsbeispiele).

Durch die oben genannte Reduktion des Einspritzdruckes beim Spritzgießen können Glanzstellen, welche beim Spritzgießen der aus dem Stand der Technik bekannten Verbundstoffe durch ein "Wegschieben" der Holzfasern an der Einspritzstelle entstehen, verhindert werden. Dadurch kann die Optik der hergestellten Gegenstände stark verbessert werden, da diese ein homogenes Aussehen erhalten.

Durch Verwendung von schwarzem Weich-PVC im erfindungsgemäßen Verbundwerkstoff wird ein Grauton des Verbundwerkstoffes erzielt, welcher bei vielen Gegenständen gewünscht ist. Dadurch können zusätzliche Farbstoffe entfallen.

Das eingesetzte Weich-PVC kann aber auch farblos sein.

Das enthaltene Weich-PVC weist eine Shore-Härte im Bereich von 40 bis 80, bevorzugt von ca. 65 - 75, besonders bevorzugt von ca. 70 auf. Vorzugsweise beträgt der Weichmacheranteil im Hart-PVC ca. 0 bis 6 Gew.-%, bevorzugt 0 bis 3 Gew.%. Vorzugsweise beträgt der Weichmacheranteil im Weich-PVC ca. 10 bis 50 Gew.%, insbesondere ca. 30 Gew.-%.

Mit Vorteil beträgt der Anteil an Weich-PVC 10 bis 50 Gew.-%, vorzugsweise 30 bis 35 Gew.-%, bezogen auf die Gesamtmenge an Naturfaser, Hart-PVC und Weich-PVC. Vorzugsweise entspricht im erfindungsgemäßen Verbundwerkstoff der Anteil an Hart-PVC dem Anteil der Naturfaser. Durch die genannten Härten und Anteile der einzelnen Komponenten werden die oben genannten Vorteile im besonderen Maße erreicht.

Vorteilhafterweise wird der erfindungsgemäße Verbundstoff durch Mischen von Naturfaser-Hart-PVC-Compound mit Weich-PVC hergestellt. Dabei werden in der Regel Pellets aus Naturfaser-Hart-PVC-Verbundstoff mit dem Weich-PVC vermengt.

Die Naturfasern können beispielsweise aus Getreideabfällen hergestellt werden. Die Naturfasern sind Zellulosefasern. Vorzugsweise sind die Naturfasern Holzfasern, so dass der Verbundwerkstoff ein Holz-PVC-Verbundwerkstoff ist. Ein derartiger Verbundwerkstoff weist besonders vorteilhafte Eigenschaften auf, die weiter unten näher dargelegt sind.

Die vorliegende Erfindung betrifft ferner einen Verbundwerkstoff, umfassend Naturfasern, PVC sowie einen Weichmacher, wobei der Weichmacheranteil ca. 3 bis 25 Gew.-% beträgt. Vorzugsweise beträgt der Weichmacheranteil in dem genannten Verbundwerkstoff ca. 10 bis 20 Gew.-%. Vorzugsweise sind die Naturfasern in dem genannten Verbundwerkstoff Holzfasern.

Der genannte Verbundwerkstoff gemäß den Ansprüchen 9 bis 11 weist ähnliche Vorteile wie der Verbundwerkstoff gemäß den Ansprüchen 1 bis 8 auf, wenngleich die Vorteile des Verbundwerkstoffs gemäß den Ansprüchen 1 bis 8 überraschenderweise noch deutlicher ausfallen. Auch Gegenstände, die mit dem Verbundwerkstoff gemäß den Ansprüchen 9 bis 11 hergestellt sind, zeigen eine hohe Bruchfestigkeit und wenig Rissbildungen bei Einwirkung von Wasser.

Der erfindungsgemäße Verbindungsstoff enthält vorzugsweise neben dem PVC-Anteil Schlagzähmacher (z.B. ca. 5 Gew.-%), Kreide (z.B. ca. 10 %), Stabilisatoren/Verarbeitungshilfsmittel (z.B. ca. 3 Gew.-%) sowie Pigmente (z.B. ca. 3 Gew.-%).

Die vorliegende Erfindung betrifft auch die Verwendung des erfindungsgemäßen Verbundwerkstoffes zur Herstellung von Laminatersatz, Bodenprofilen, Fensterprofilen oder Wandpaneelen.

Die vorliegende Erfindung betrifft ferner einen Gegenstand, enthaltend einen erfindungsgemäßen Verbundwerkstoff.

Die folgend beschriebenen Versuche demonstrieren in eindrucksvoller Art und Weise die Vorteile des erfindungsgemäßen Verbundwerkstoffes.

Die Zusammensetzungen der verwendeten Materialien (Holz-Hart-PVC-Verbundstoff und Weich-PVC) sind in den Tabellen 1 und 2 dargestellt:

**Tabelle 1:**

| **Zusammensetzung des Holz-Hart-PVC-Verbundstoffes** | | | |
|---|---|---|---|
| Gehalt: Hart-PVC 50%, Holz 50% | | Feuchtigkeit <1% | |

| **Physikalische Eigenschaften:** | **Einheit:** | **Testverfahren:** | **Werte:** |
|---|---|---|---|
| • Dichte | g/cc | intern | 1.3 |
| • Schüttdichte | g/cc | intern | 0.7 |

| **Mechanische Eigenschaften:** | | | |
|---|---|---|---|
| • Streckspannung | Mpa (psi) | ISO 527/1 BA | 36 (5,220) |
| • Reißfestigkeit | Mpa (psi) | ISO 527/1 BA | 36 (5,220) |
| • Reißdehnung | % | ISO 527/1BA | 5 |
| • Elastizitätsmodul | Mpa | NFT51001 | 4000-6000 |
| • Kerbschlagzähigkeit (23°C) | KJ/m² | ISO 179 | 9.0 |

| **Thermische Eigenschaften:** | | | |
|---|---|---|---|
| • Vicat-Erweichungstemp. (5kg) °C | | ISO 306/B 50 | 82 |

**Tabelle 2:**

| **Verwendetes Weich-PVC** | | | | |
|---|---|---|---|---|
| **Eigenschaft** | **Messmethode** | | **Einheit** | **Wert** |
| Dichte | DIN EN ISO 1183-1, Verfahren A | | g/cm³ | 1,30 |
| Härte nach Shore A bei | DIN 53505 | 3g | | 69 |
| +23°C | | 15g | | 66 |
| Zugfestigkeit | DIN EN ISO 527 | | MPa | 11 |
| Bruchdehnung | DIN EN ISO 527 | | % | 340 |
| Einreißfestigkeit | ISO 34, Methode B, Verfahren A | | N/mm | 35 |
| Kältebruchtemperatur | RPM*2, keine Bruch bis | | °C | -40 |
| Brenngeschwindigkeit | ISO 3795 | | mm/min | 50 |

### 1. Schlagbiegeversuch nach DIN 53537 zur Bestimmung der Kerbschlagzähigkeit

Die durchgeführten Versuche 1 bis 11 zeigen in eindrucksvoller Art und Weise die Erhöhung der Bruchfestigkeit der einzelnen Verbundwerkstoffe bei steigenden Mengen an Weich-PVC. Bei den einzelnen Versuchen wurden jeweils 1000 g Holz-Hart-PVC-Verbundwerkstoff mit unterschiedlichen Mengen an Weich-PVC verarbeitet. Die höchste Bruchfestigkeit wurde dabei bei Verbundwerkstoffen mit einem Anteil von 500 g Weich-PVC beobachtet.

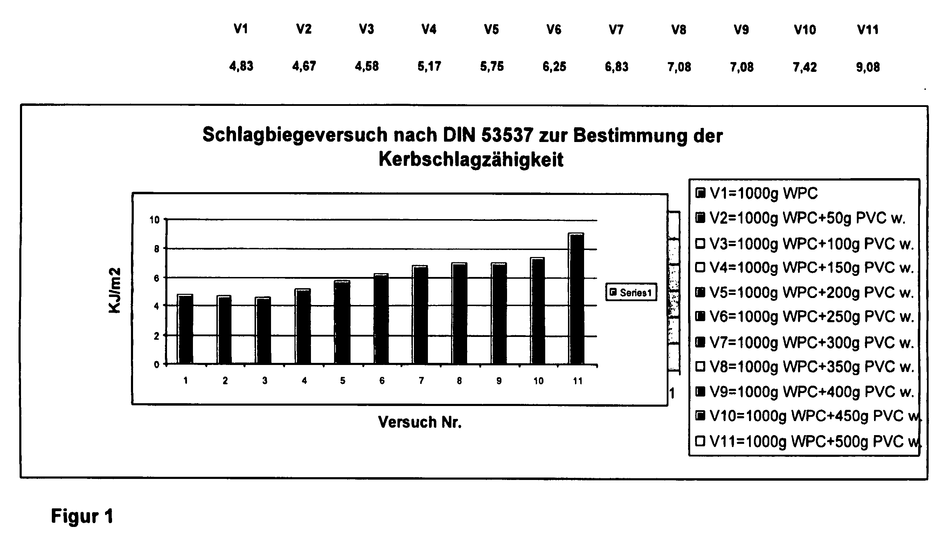

Figur 1 zeigt die genauen Ergebnisse der Versuche auf.

### 2. Quellungsversuche

Bei diesen Versuchen wurden Materialprobenteile verwendet, welche aus 1000 g Holz-Hart-PVC-Verbundstoff und 500 g Weich-PVC hergestellt wurden. Um jeweils einen Durchschnittswert zu erhalten, wurden insgesamt 10 Proben für jeweils 10 Vergleichsversuche verwendet.

Die Proben wurden zunächst nach 90 Stunden ohne Wasser vermessen und gewogen. Dabei ergab sich eine Durchschnittslänge von 138,987 mm und ein durchschnittliches Gewicht von 22,84 g, wie in Tabelle 3 dargestellt ist.

**Tabelle 3:**

| | Versuch 10 (1000 g WPC + 500 g PVC-W) | |
|---|---|---|
| | **nach 90 h ohne Wasser** | |
| | *Länge im mm* | *Gewicht in gr* |
| | 139,02 | 22,80 |
| | 139,05 | 22,80 |
| | 138,91 | 22,70 |
| | 138,98 | 22,70 |
| | 138,89 | 22,80 |
| | 139,08 | 22,90 |
| | 139,01 | 22,90 |
| | 139,03 | 22,90 |
| | 138,93 | 22,90 |
| | 138,97 | 23,00 |
| Durchschnitt | 138,987 | 22,84 |

Danach wurden die Proben Wasser ausgesetzt. Nach 48 Stunden im Wasser wurden die Proben wiederum vermessen und gewogen. Dabei ergab sich eine durchschnittliche Länge von 139,204 mm und ein durchschnittliches Gewicht von 23,30 g, wie aus Tabelle 4 ersichtlich.

**Tabelle 4:**

| | Versuch 10 (1000 g WPC + 500 g PVC-W) | |
|---|---|---|
| | **nach 90 h ohne Wasser** | |
| | *Länge im mm* | *Gewicht in gr* |
| | 139,18 | 23,30 |
| | 139,28 | 23,30 |
| | 139,08 | 23,30 |
| | 139,10 | 23,30 |
| | 139,19 | 23,30 |
| | 139,25 | 23,30 |
| | 139,24 | 23,20 |
| | 139,21 | 23,30 |
| | 139,25 | 23,30 |
| | 139,26 | 23,40 |
| Durchschnitt | 139,204 | 23,30 |

Schließlich wurden die Proben nochmals nach 168 Stunden im Wasser vermessen und gewogen. Dabei ergab sich eine durchschnittliche Länge von 139,58 mm und ein Gewicht von 23,5 g, wie der Tabelle 5 entnommen werden kann.

**Tabelle 5:**

| | Versuch 10 (1000 g WPC + 500 g PVC-W) | |
|---|---|---|
| | **nach 168 h im Wasser** | |
| | *Länge in mm* | *Gewicht in gr* |
| | 139,70 | 23,5 |
| | 139,66 | 23,4 |
| | 139,45 | 23,4 |
| | 139,59 | 23,4 |
| | 139,63 | 23,4 |
| | 139,49 | 23,6 |
| | 139,57 | 23,5 |
| | 139,53 | 23,5 |
| | 139,58 | 23,6 |
| | 139,60 | 23,7 |
| Durchschnitt | 139,58 | 23,5 |

Die Proben zeigten selbst nach 168 Stunden im Wasser lediglich eine Längenzunahme von 0,45 %. Auch die Gewichtszunahme von 2,89 % ist minimal und zeigt, wie wenig Wasser durch die Probenteile aufgenommen worden sind.

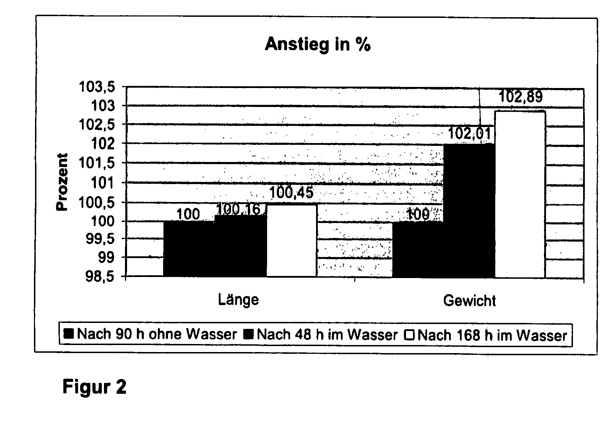

Figur 2 stellt die Quellungs-Versuchsergebnisse graphisch dar.

### 3. Verarbeitbarkeitsversuche

Bei den durchgeführten 11 Versuchen wurden dieselben Materialproben verwendet, wie bei den Schlagbiegeversuchen 1 bis 11. Es wurden bei den einzelnen Versuchen also Proben aus Holz-Hart-PVC-Verbundwerkstoff mit unterschiedlichen Mengen an Weich-PVC verwendet. Tabelle 6 zeigt in eindrucksvoller Art und Weise die Verbesserung der Verarbeitbarkeit bei steigendem Weich-PVC-Gehalt.

So beträgt der benötigte Spritzdruck beim reinen Holz-Hart-PVC-Verbundstoff 180,9 bar. Bei der Materialprobe von Versuch 11 (1000 g Holz-Hart-PVC-Verbundstoff + 500 g Weich-PVC) beträgt der benötigte Spritzdruck dagegen lediglich 87,6 bar. Die Reduzierung des Spritzdruckes verhindert die oben genannten Unregelmäßigkeiten im Material (Glanzstellen). Auch die Spritzzeit reduziert sich um 0,08 Sekunden. Sowie sich der Nachdruck um 20 bar verringert.

Besonders bemerkenswert ist auch die Reduzierung der Werkzeugtemperatur bei steigenden Weich-PVC-Anteilen. So kann die Werkzeugtemperatur bereits bei einer Menge von 400 g Weich-PVC bei 1000 g Holz-Hart-PVC-Verbundstoff im Vergleich zum reinen Holz-Hart-PVC-Verbundstoff um 35°C reduziert werden. Dies bringt selbstverständlich eine enorme Energieeinsparung.

Verfahren zur Herstellung eines erfindungsgemäßen Gegenstandes:

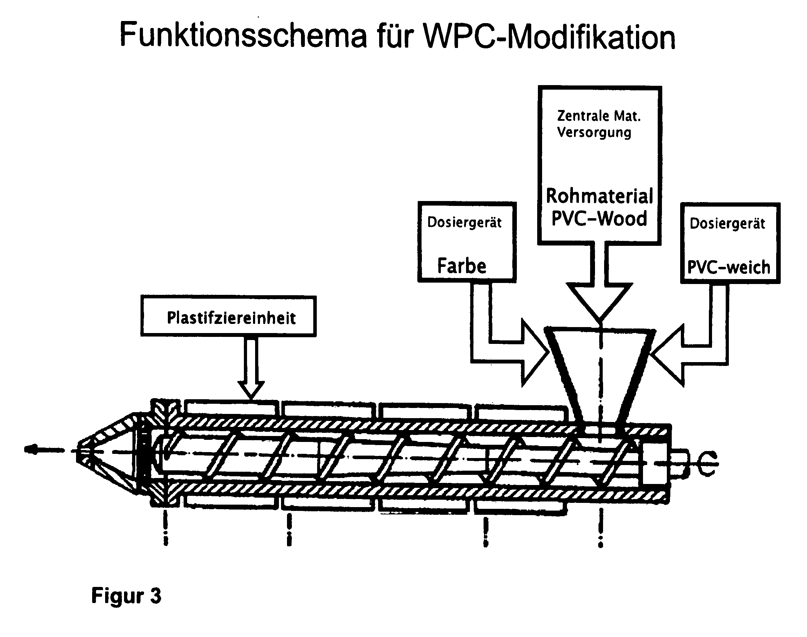

Figur 3 zeigt ein Funktionsschema, welches in vereinfachter Weise das Herstellungsverfahren eines erfindungsgemäßen Gegenstandes verdeutlicht. Über die zentrale Materialversorgung wird das Holz-Hart-PVC-Rohmaterial dem Trichter zugeführt. Beim Aufdosieren des Zylinders wird dem Rohmaterial über je ein Dosiergerät die benötigte Menge an Weich-PVC sowie Farbe prozentual zugeführt. In der Plastifiziereinheit wird das gesamte Material in bekannter Art und Weise weiter verarbeitet.

**Tabelle 6**

| Spritzdruck PvS (bar) (Spitzenwert) | **Vers.1** 180,9 | **Vers.2** 135,4 | **Vers.3** 120,3 | **Vers.4** 102,8 | **Vers.5** 97,7 | **Vers.6** 86,4 | **Vers.7** 85,7 | **Vers.8** 85,4 | **Vers.9** 86,7 | **Vers.10** 86,4 | **Vers.11** 87,6 |
|---|---|---|---|---|---|---|---|---|---|---|---|
| Spritzzeit (sec.) | 1,44 | 1,42 | 1,47 | 1,47 | 1,42 | 1,41 | 1,41 | 1,41 | 1,41 | 1,4 | 1,4 |
| Nachdruck (bar) | 50 | 50 | 30 | 30 | 30 | 30 | 30 | 30 | 30 | 30 | 30 |
| Werkzeugtemp. (°C) | 85 | 80 | 80 | 80 | 70 | 70 | 60 | 60 | 50 | 50 | 50 |

## Patentansprüche

1. Verbundwerkstoff, umfassend Naturfasern, PVC mit einem Weichmacheranteil von 0 bis 12 Gew.-% (Hart-PVC) und PVC mit einer Shore-Härte im Bereich von 40 bis 80 (V1/eich-PVC).

2. Verbundwerkstoff nach Anspruch 1, **dadurch gekennzeichnet, dass** das enthaltene Weich-PVC eine Shore-Härte im Bereich von 65 bis 75, besonders bevorzugt von ca. 70 aufweist.

3. Verbundwerkstoff nach einem der Ansprüche 1 oder 2, **dadurch gekennzeichnet, dass** der Weichmacheranteil im Hart-PVC ca. 0 bis 6 Gew.-%, vorzugsweise 0 bis 3 Gew.-% beträgt.

4. Verbundwerkstoff nach einem der vorhergehenden Ansprüche, **dadurch gekennzeichnet, dass** der Weichmacheranteil im Weich-PVC ca. 10 bis 50 Gew.-%, vorzugsweise ca. 30 Gew.-% beträgt.

5. Verbundwerkstoff nach einem der Ansprüche 1 oder 2, **dadurch gekennzeichnet, dass** der Anteil an Weich-PVC 10 bis 50 Gew.-% , vorzugsweise 30 bis 35 Gew.-% bezogen auf die Gesamtmenge an Naturfasern, Hart-PVC und Weich-PVC beträgt.

6. Verbundwerkstoff nach einem der vorhergehenden Ansprüche, **dadurch gekennzeichnet, dass** der Anteil an Hart-PVC dem Anteil an Naturfasern entspricht.

7. Verbundwerkstoff nach einem der vorhergehenden Ansprüche, erhältlich durch Mischen von Naturfaser-Hart-PVC-Compound mit Weich-PVC.

8. Verbundwerkstoff nach einem der vorhergehenden Ansprüche, **dadurch gekennzeichnet, dass** die Naturfasern Holzfasern sind.

9. Verbundwerkstoff, umfassend Naturfasern, PVC sowie einen Weichmacher, wobei der Weichmacheranteil ca. 3 bis 25 Gew.-% beträgt.

10. Verbundwerkstoff nach Anspruch 9, **dadurch gekennzeichnet, dass** der Weichmacheranteil ca. 10 bis 20 Gew.-% beträgt.

11. Verbundwerkstoff nach einem der Ansprüche 9 oder 10, **dadurch gekennzeichnet, dass** die Naturfasern Holzfasern sind.

12. Verwendung eines Verbundstoffes nach einem der Ansprüche 1 bis 11 zur Herstellung von Laminatersatz, Bodenprofilen, Fensterprofilen oder Wandpaneelen.

13. Gegenstand, enthaltend einen Verbundwerkstoff nach einem der Ansprüche 1 bis 11.

## Claims

1. Composite material comprising natural fibres, PVC having a plasticizer fraction of 0% to 12% by weight (rigid PVC) and PVC having a Shore hardness in the range from 40 to 80 (flexible PVC).

2. Composite material according to Claim 1, **characterized in that** the flexible PVC present has a Shore hardness in the range from 65 to 75, more preferably of about 70.

3. Composite material according to either of Claims 1 and 2, **characterized in that** the plasticizer fraction in the rigid PVC is about 0% to 6% by weight, preferably 0% to 3% by weight.

4. Composite material according to any of the preceding claims, **characterized in that** the plasticizer fraction in the flexible PVC is about 10% to 50% by weight, preferably about 30% by weight.

5. Composite material according to either of Claims 1 and 2, **characterized in that** the .fraction of flexible PVC is 10% to 50% by weight, preferably 30% to 35% by weight, based on the total amount of natural fibres, rigid PVC and flexible PVC.

6. Composite material according to any of the preceding claims, **characterized in that** the fraction of rigid PVC corresponds to the fraction of natural fibres.

7. Composite material according to any of the preceding claims, obtainable by mixing natural fibre/rigid PVC compound with flexible PVC.

8. Composite material according to any of the preceding claims, **characterized in that** the natural fibres are wood fibres.

9. Composite material comprising natural fibres, PVC and a plasticizer, the plasticizer fraction being about 3% to 25% by weight.

10. Composite material according to Claim 9, **characterized in that** the plasticizer fraction is about 10% to 20% by weight.

11. Composite material according to either of Claims 9 and 10, **characterized in that** the natural fibres are wood fibres.

12. Use of a composite according to any of Claims 1 to 11 for producing laminate substitute, floor profiles, window profiles or wall panels.

13. Article comprising a composite material according to any of Claims 1 to 11.

## Revendications

1. Matériau composite, comprenant des fibres naturelles, du PVC présentant une proportion de plastifiant de 0 à 12% en poids (PVC dur) et du PVC présentant une dureté Shore dans la plage de 40 à 80 (PVC souple).

2. Matériau composite selon la revendication 1, **caractérisé en ce que** le PVC souple contenu présente une dureté Shore dans la plage de 65 à 75, de manière particulièrement préférée d'environ 70.

3. Matériau composite selon l'une quelconque des revendications 1 ou 2, **caractérisé en ce que** la proportion de plastifiant dans le PVC dur est d'environ 0 à 6% en poids, de préférence de 0 à 3% en poids.

4. Matériau composite selon l'une quelconque des revendications précédentes, **caractérisé en ce que** la proportion de plastifiant dans le PVC souple est d'environ 10 à 50% en poids, de préférence d'environ 30% en poids.

5. Matériau composite selon l'une quelconque des revendications 1 ou 2, **caractérisé en ce que** la proportion de PVC souple est de 10 à 50% en poids, de préférence de 30 à 35% en poids par rapport à la quantité totale de fibres naturelles, de PVC dur et de PVC souple.

6. Matériau composite selon l'une quelconque des revendications précédentes, **caractérisé en ce que** la proportion de PVC dur correspond à la proportion de fibres naturelles.

7. Matériau composite selon l'une quelconque des revendications précédentes, pouvant être obtenu par mélange d'un composite fibres naturelles-PVC dur avec du PVC souple.

8. Matériau composite selon l'une quelconque des revendications précédentes, **caractérisé en ce que** les fibres naturelles sont des fibres de bois.

9. Matériau composite comprenant des fibres naturelles, du PVC ainsi qu'un plastifiant, où la proportion de plastifiant représente environ 3 à 25% en poids.

10. Matériau composite selon la revendication 9, **caractérisé en ce que** la proportion de plastifiant représente environ 10 à 20% en poids.

11. Matériau composite selon l'une quelconque des revendications 9 ou 10, **caractérisé en ce que** les fibres naturelles sont des fibres de bois.

12. Utilisation d'un matériau composite selon l'une quelconque des revendications 1 à 11 pour la fabrication d'un produit de remplacement d'un laminé, de profilés pour sol, de profilés pour fenêtre ou de panneaux muraux.

13. Objet, contenant un matériau composite selon l'une quelconque des revendications 1 à 11.
